(19) Europäisches Patentamt
European Patent Office
Office européen des brevets

(11) Veröffentlichungsnummer : **0 016 392**
**B1**

(12) # EUROPÄISCHE PATENTSCHRIFT

(45) Veröffentlichungstag der Patentschrift : **28.04.82**

(51) Int. Cl.³ : **C 08 F 4/70**, B 01 J 31/14, C 08 F 136/06

(21) Anmeldenummer : **80101202.2**

(22) Anmeldetag : **10.03.80**

(54) **Katalysator, dessen Herstellung und Verfahren zur Polymerisation von Butadien.**

(30) Priorität : **22.03.79 DE 2911262**

(43) Veröffentlichungstag der Anmeldung : **01.10.80 (Patentblatt 80/20)**

(45) Bekanntmachung des Hinweises auf die Patenterteilung : **28.04.82 Patentblatt 82/17**

(84) Benannte Vertragsstaaten : **BE DE FR GB IT NL**

(56) Entgegenhaltungen :
**DE - A - 2 361 782**
**DE - A - 2 447 203**
**US - A - 3 040 016**
**CHEMICAL ABSTRACTS, Band 83, Nr. 16, 20. Oktober 1975, Zusammenfassung Nr. 132310z, Seite 28, Columbus, Ohio, US**
**K. YAMAGUCHI et al. : « Polybutene-1 »**

(73) Patentinhaber : **BAYER AG**
**Zentralbereich Patente, Marken und Lizenzen**
**D-5090 Leverkusen 1, Bayerwerk (DE)**

(72) Erfinder : **Beck, Manfred, Dr.**
**Auf dem Krahwinkel 5**
**D-5074 Odenthal (DE)**
Erfinder : **Pampus, Gottfried, Dr.**
**Friedrich-Weskott-Strasse 14**
**D-5090 Leverkusen (DE)**

**EP 0 016 392 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 18, rue St-Denis, 75001 Paris, France

Katalysator, dessen Herstellung und Verfahren zur Polymerisation von Butadien

Die Erfindung betrifft einen Mehrkomponentenkatalysator, bestehend aus einer Kobaltverbindung, einer aluminiumorganischen Verbindung, Wasser und einem Phosphit, ein Verfahren zu dessen Herstellung durch Umsetzung der Katalysatorkomponenten in beliebiger Reihenfolge und ein Verfahren zur Polymerisation von Butadien.

Ziegler-Katalysatoren auf Basis von Kobaltsalzen und bestimmten organischen Phosphorigsäureestern sowie deren Verwendung bei der Polymerisation von Butadien sind bekannt. Die DE-OS 2 361 782 beschreibt die Herstellung von niedermolekularem flüssigen Polybutadien durch Verwendung eines solchen Katalysatorsystems. Die bevorzugte Katalysatorkomponente Triphenylphosphit liefert ein Öl mit mittlerem Vinylgehalt.

Gemäß der DE-OS 2 447 203 lassen sich Polybutadiene mit hohem Vinylgehalt und hoher Viskosität herstellen, wenn man dem gleichen Katalysatorsystem Tris-(o-phenylphenyl-) phosphite oder Trisnaphthylphosphite zufügt. Diese Katalysatorsysteme liefern bevorzugt Vinylgehalte von 40-60 Gew.-%.

Das unter Verwendung von Kobaltkatalysatoren ohne Zusatz von Cokatalysatoren hergestellte Polybutadien besitzt nur einen geringen Vinylgehalt von etwa 1 Gew.-%. Für manche Einsatzzwecke ist dieser Vinylgehalt zu gering. So erfordert die Herstellung von schlagfestem Polystyrol mittels Polybutadienzusatz ein Polymer mit einem Vinylgehalt von etwa 2,5-17 Gew.-%. Zu einem derartigen Einsatzzweck benutzt man zur Zeit einen Polybutadienkautschuk der unter Verwendung von Lithiumbutyl als Katalysator hergestellt wurde (Li-BR). Derartiges Li-BR zeichnet sich durch einen Vinylgehalt von etwa 10-12 Gew.-% aus. Li-BR besitzt jedoch einen anderen Molekülaufbau als Polybutadien, welches mit Cobaltkatalysatoren hergestellt wurde (Co-BR). Li-BR ist praktisch unverzweigt. Lösungen solcher Kautschuke beispielsweise in Styrol, wie sie zur Herstellung von schlagfestem Polystyrol eingesetzt werden, zeigen höhere Viskositäten als solche aus Kautschuken, die bei gleichem Molekulargewicht eine verzweigte Molekülstruktur besitzen.

Co-Br ist im Gegensatz zu Li-BR ein verzweigter Kautschuk. Daher besitzen seine Lösungen im Verhältnis zu Li-BR niedrigere Viskositäten, bzw. man kann Produkte mit höherem Molekulargewicht einsetzen, um gleiche Lösungsviskositäten einzusetzen.

Es besteht daher ein Bedürfnis in der Technik, ein Co-BR bereitzustellen, welches in etwa die gleichen Vinylgehalte wie ein Li-BR aufweist und eine Mooney-Viskosität ML 4′ (100 °C) von 20-60 besitzt.

Es wurde nun gefunden, daß man solches Co-BR herstellen kann, wenn alkylsubstituierte Triphenylphosphite als eine Katalysatorkomponente eingesetzt werden.

Gegenstand der Erfindung ist somit ein Katalysator bestehend aus a) einer Kobaltverbindung, b) einer aluminiumorganischen Verbindung, c) Wasser und d) einem Phosphit, dadurch gekennzeichnet, daß das Phosphit eine Verbindung der Formel (I)

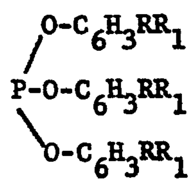

(I)

darstellt, in der

R einen $C_3$-$C_{20}$, bevorzugt $C_8$-$C_{16}$ Alkylrest und

$R_1$ Wasserstoff oder einen $C_1$-$C_6$ Alkylrest, bevorzugt Wasserstoff

bedeuten.

Die an verschiedenen Phenylresten befindlichen Reste R und $R_1$ können jeweils gleich oder verschieden sein.

Als Kobaltverbindungen kann man organische und anorganische Verbindungen des Kobalts mit geeigneten Säuren verwenden, z.B. Kobalthalogenide wie Kobaltchlorid, Kobaltbromid, Kobaltjodid, Kobaltfluorid, Kobaltsulfat, -nitrat, -carbonat, -phosphat, ferner Kobaltacetat, Kobaltpropionat, -valerat, -octanoat, -stearat, -naphthenat, Kobaltacetylacetonat oder Dicyclopentadienyl-Kobalt. Bevorzugt sind Kobaltnaphthenat und -octanoat.

Geeignete aluminiumorganische Verbindungen sind Dialkylaluminiumhalogenide, z.B. $Et_2AlCl$, i-$Bu_2AlCl$, $Et_2AlBr$, i-$Bu_2AlBr$ oder Alkylaluminium sesquichloride z.B. $Et_3Al_2Cl_3$. Bevorzugt ist $Et_2AlCl$.

Als Phosphite der Formel (1) kommen näher in Betracht:

Trisnonylphenylphosphit, Butylphenyl-dinonyl-phenylphosphit, Dibutylphenyl-nonylphenyl-phosphit.

Diese Verbindungen sind literaturbekannt.

Das molare Verhältnis der Katalysatorkomponente Kobaltverbindung zur aluminiumorganischen Verbindung kann zwischen 1 : 5 bis 1 : 1 000, vorzugsweise zwischen 1 : 20 bis 1 : 100 liegen. Das molare Verhältnis der Kobaltkomponente zu Wasser kann betragen 1 : 0,5 bis 1 : 1 000, bevorzugt ist ein Bereich von 1 : 1 bis 1 : 500. Das molare Verhältnis der Kobaltverbindung zu Phosphit kann betragen 1 : 0,01 bis 1 : 10, bevorzugt sind Verhältnisse von 1 : 0,2 bis 1 : 2,0.

Ein weiterer Gegenstand der Erfindung ist ein Verfahren zur Herstellung des Katalysators, welches dadurch gekennzeichnet ist, daß man die Katalysatorkomponenten a)-d) in beliebiger Reihenfolge bei Temperaturen zwischen − 70 und + 80 °C, vorzugsweise zwischen − 20 und + 40 °C, insbesondere zwischen + 10 bis + 30 °C miteinander umsetzt.

Bevorzugt ist die Reihenfolge der Eingabe wie folgt:

1. Aluminiumorganische Verbindung, 2. Wasser, 3. Kobaltverbindung und 4. Phosphit.

Die Herstellung des Katalysators kann in üblichen inerten Lösungsmitteln wie aliphatischen, cycloaliphatischen und/oder aromatischen Kohlenwasserstoffen erfolgen. Die Herstellung kann diskontinuierlich oder kontinuierlich erfolgen.

Sollte der Katalysator bei der Polymerisation von Butadien eingesetzt werden, erscheint es zweckmäßig, zu seiner Herstellung das gleiche Lösungsmittel zu verwenden, welches als Lösungsmittel bei der Polymerisation eingesetz wird. Im Falle der Polymerisation von Butadien ist es weiterhin nicht notwendig, daß der Katalysator vorher präformiert worden ist. Die Katalysatorkomponenten können einzeln oder gemeinsam in beliebiger Reihenfolge der Mischung Lösungsmittel/Butadienmonomer oder in der Reihenfolge 1. Lösungsmittel, 2. Katalysatorkomponenten, 3. Butadien, oder in der Reihenfolge 1. Lösungsmittel, 2. einige Katalysatorkomponenten, 3. Butadien, 4. Rest Katalysatorkomponenten zugegeben werden. Weiterhin ist es möglich, das Lösungsmittel in mehreren Teilmengen bei den einzelnen Zudosierungsstufen zuzugeben.

Ein weiterer Gegenstand der Erfindung ist ein Verfahren zur Polymerisation von Butadien in Lösung, welches dadurch gekennzeichnet ist, daß man als Katalysator das erfindungsgemäße Katalysatorsystem verwendet. Auf diese Weise erhält man ein Polybutadien mit einem Vinylgehalt von 2,5-17 % und einer Viskosität im Mooney-Bereich ML 4' (100 °C) von 20-70.

Die Ausführung der Polymerisation erfolgt als Lösungspolymerisation diskontinuierlich oder kontinuierlich. Als Lösungsmittel dienen inerte Kohlenwasserstoffe, wie z.B. Hexan, Cyclohexan, Benzol, Toluol. Bevorzugt sind Benzol und Cyclohexan.

Das Verfahren kann bei Temperaturen von 0 bis 100 °C vorzugsweise zwischen 10 und 60 °C ausgeführt werden.

Nach Beendigung der Polymerisation wird in bekannter Weise mit H-aciden Verbindungen abgestoppt, stabilisiert und vorzugsweise durch Behandlung mit heißem Wasser plus Dampf aufgearbeitet.

Der Katalysator wird in dem Fachmann geläufigen Mengen zugesetzt. Bevorzugt wird der Katalysator in solchen Mengen zugesetzt, daß die Mengen an Kobaltverbindungen 0,01 bis 0,5 mMol je 100 g zu polymerisierendem Monomer betragen. Das molare Verhältnis von Aluminium-Verbindungen zu Kobalt-Verbindungen kann 1 000 bis 5 : 1 betragen, bevorzugt ist ein Verhältnis von 100 bis 20 : 1.

Das molare Verhältnis von Kobalt-Verbindungen zu Phosphor-Verbindungen kann von 10 bis 0,01 : 1 variieren. Bevorzugt sind Verhältnisse von 2 bis 0,2 : 1.

Das molare Verhältnis Wasser zu aluminiumorganischer Verbindung kann von 0,1 bis 1,0 : 1 variiert werden, bevorzugt ist ein Bereich von 0,2 bis 0,5 : 1.

Das auf diese Weise hergestellte Polybutadien eignet sich bevorzugt zur Herstellung von schlagfestem Polystyrol, sowie ebenfalls zur Herstellung von technischen Gummiartikeln. Es kann auch als Reifenkautschuk eingesetzt werden.

Die Erfindung wird durch folgende Beispiele näher erläutert: Anhand von Vergleichsversuchen wird dargelegt, daß die nach der DE-OS 2 361 782 als Katalysatorkomponente einsetzbaren aliphatischen und araliphatischen Phosphite nur Polybutadien mit niedrigen Vinylgehalten liefern.

Die gemäß der DE-OS 2 447 203 eingesetzten Naphthylphosphite ergeben zwar Produkte mit den höchsten Vinylgehalten, aber keine Kautschuke, sondern Harze oder Öle. Ein Vergleich der einzelnen genannten Phosphit-Typen unter gleichen Reaktionsbedingungen und gleicher Katalysator-Zusammensetzung läßt erkennen, daß mit Erhöhung des aromatischen Anteils im Phosphit eine Erhöhung der Vinylgehalte der Produkte einhergeht, daß allerdings umgekehrt die Viskosität vermindert wird. Nachstehende Tabelle gibt die Zusammenhänge wieder:

| Phosphit | Ausbeute | Polymer-viskosität | Vinylgehalt |
|---|---|---|---|
| Octyl | sehr gut | zu hoch | 2 |
| Benzyl | sehr gut | zu hoch | 2 |
| Nonylphenyl | gut | geeignet | 16 |
| Phenyl | schlecht | zu niedrig | 25 |
| Naphthyl | schlecht | zu niedrig | 43 |

Gegenüber Naphthylphosphit ist Nonylphenylphosphit bei verschiedenen untersuchten Rezepturen überlegen. Man erhält sowohl bessere Ausbeuten und stets kautschukartige Produkte im Vinylbereich

2,5-17, wogegen Naphthylphosphite zwar teilweise höhere Vinylgehalte aber überwiegend Produkte mit zu niedriger Viskosität liefern.

Die Prozentangaben — falls nicht anders angegeben — beziehen sich auf Gewichtsprozente.

Beispiel 1

In einem 2-1-Glasautoklav wurden unter Ausschluß von Sauerstoff und Feuchtigkeit in der angegebenen Reihenfolge vorgelegt: 1 100 ml trockenes Benzol, 180 g Butadien. Dann fügte man $Al(C_2H_5)_2Cl$ zu (4,06 mMol je 100 g Monomer), anschließend Wasser ($H_2O$ : Al = 0,284, molar) und Kobaltnaphthenat (0,058 mMol/100 g Monomer). Als letzte Komponente gab man das in der Tabelle angegebene Phosphit zu (Molverhältnis P : Co = 1,0). Die Polymerisation wurde bei 20 °C gestartet und stufenweise stündlich um 10 °C erhöht. Nach 4 Stunden Laufzeit wurde durch Zugabe von Stearinsäure (0,8 %) und 0,3 % Stabilisator BKF (2,2-Methylen-bis-(4-methyl-6-tert.-butylphenol) die Polymerisation unterbrochen und der Kautschuk durch Einlaufenlassen der Lösung in die vierfache Gewichtsmenge Äthanol ausgefällt. Nach Trennung vom Fällmittel wurde 14 Stunden im Vakuum bei 70 °C getrocknet. In Tabelle I sind die Ergebnisse mit verschiedenen Phosphorigsäureestern zusammengestellt.

Tabelle I
Einfluß von Phosphiten auf die Butadien-Polymerisation

| Phosphit | Umsatz nach 1 | 2 | 3 | 4 Stdn. | ML 4' (100°C) | 1,2-Gehalt (%) | L-Wert 3) |
|---|---|---|---|---|---|---|---|
| Trioctyl | 82 | 97 | 98 | 98 | > 200 | 2,4 | 7,49 |
| Tribenzyl | 76 | 88 | 90 | 93 | > 200 | 2,1 | 9,51 |
| Trisnonyl-phenyl | 50 | 57 | 60 | 63 | 26 | 16,3 | 1,90 |
| Triphenyl | 13 | 30 | 38 | 44 | - 1) | 25,2 | 0,61 |
| Tri-1-naphthyl 2) | 29 | 34 | 38 | 39 | - 1) | 42,6 | 0,79 |

1) kein ML 4'-Wert meßbar, da zu weich und klebrig
2) Schmelzpunkt 90 °C ; P = 6,70 % (gef.) ; 6,73 (ber.)
3) $\eta$ sp/c für c = 5 g pro l in Toluol bei 25 °C.

Die Ergebnisse zeigen, daß im Vergleich aliphatische und araliphatische Phosphite ungeeignet sind zur Herstellung von Polybutadien mit Vinylgehalten von 2,5-17 Gew.-% Rein aromatische Phosphite dagegen liefern zwar Produkte mit hohen Vinylgehalten, diese sind aber nicht kautschukartig. Lediglich das alkylsubstituierte Triphenylphosphit nimmt eine Mittelstellung ein. Man erhält Produkte im angestrebten Vinylbereich mit Kautschukeigenschaften. Allgemein kann festgehalten werden, daß mit zunehmender Substituierung durch aromatische Reste eine Zunahme der Vinyl (1,2)-Gehalte und eine drastische Verringerung der Molgewichte eintritt.

Beispiel 2

Dieses Beispiel erläutert die Überlegenheit von Trisnonylphenylphosphit (NPP) gegenüber dem bekannten Tri-1-naphthylphosphit (NP). Gemäß Beispiel 1 werden in folgender Reihenfolge und Menge Polymerisationsansätze mit gleichen molaren Mengen der P-Verbindungen ausgeführt: Benzol (1 100 ml), Butadien (180 g), 800 ppm 1,2-Butadien bezogen auf 1,3-Butadien, Co-Naphthenat (0,058 mMol/100 g Monomer), Wasser ($H_2O$ : Al = 0,46), Phosphorigsäureester (Co : P = 0,7), $Al(C_2H_5)_2Cl$ (2,6 mMol/100 g Monomer). Die Ergebnisse sind in Tabelle II zusammengestellt.

Tabelle II
Vergleich der Wirksamkeit von NPP und NP

| | Phosphit | Umsatz nach 1 | 2 | 3 | 4 h | ML-4' (100°C) | L-Wert[1)] | 1.2-Gehalt (%) |
|---|---|---|---|---|---|---|---|---|
| A | Trisnonyl-phenyl | 71 | 82 | 85 | 87 | 50 | 2,69 | 6,9 |
| B | Tri-1-naph-thyl | 27 | 33 | - | 40 | dickflüssig | 0,56 | 17,7 |

1) vgl. 3) Tabelle I

Der Vergleich der Viskositäten beider Produkte beweist — abgesehen vom Umsatz — den Vorteil von NPP. Produkt A ist ein Kautschuk, der sich zur Herstellung von schlagfestem Polystyrol eignet, B ist hierfür unbrauchbar.

Beispiel 3

In diesem Beispiel werden die beiden Phosphite von Beispiel 2 in einer veränderten Polymerisationsrezeptur gegenübergestellt. Verändert wurden : 1,2-Butadien (1 000 ppm), Co-Naphthenat (0,08 mMol je 100 g Monomer), Wasser ($H_2O$ : Al = 0,46), Phosphit (Co : P = 1,0), $Al(C_2H_5)_2Cl$ (4,2 mMol je 100 g Monomer).

Tabelle III

| | Phosphit | Umsatz nach 1 | 2 | 3 | 4 h | ML-4' (100°C) | 1,2-Gehalt (%) | L-Wert |
|---|---|---|---|---|---|---|---|---|
| A | Trisnonyl-phenyl | 77 | 85 | 86 | 88 | 38 | 8,2 | |
| B | Trisnonyl-phenyl | 64 | 75 | 80 | 82 | 45 | 12,1 | |
| C | Tri-1-naphthyl | 19 | 33 | - | 43 | dickflüssig | 31,6 | 0,14 |
| D | Tri-1-naphthyl | 30 | 40 | 46 | 47 | dickflüssig | 43,6 | |

Auch in dieser Rezeptur erweist sich die Überlegenheit von NPP (Versuche A,B) gegenüber NP (Versuche C,D).

Beispiel 4

Wie schon in den Beispielen 1-3 gezeigt, beeinflußt die Variation der Reihenfolge der Katalysatorbestandteile keineswegs die Ergebnisse in negativer Weise. In nachfolgendem Beispiel wird die Al-Komponente (im Gegensatz zu Beispiel 2 und 3 zuerst zugegeben. Man erhält ebenfalls einen Kautschuk mit 1,2-Gehalt im gewünschten Bereich.

Benzol (1 100 ml), Butadien (180 g), 1,2-Butadien (1 200 ppm, bezogen auf 1,3-Butadien), $Al(C_2H_5)_2Cl$ (4,5 mMol/100 g Monomer), Wasser ($H_2O$ : Al = 0,45), Co-Naphthenat (0,058 mMol/100 g Monomer), Trisnonylphenylphosphit (Co : P = 1,0). Nach 4 Stunden wird aufgearbeitet wie beschrieben. Man erhält 148 g Kautschuk (82 %) mit einem ML-4'-Wert 38 und einem 1,2-Gehalt von 9,4 %, cis 88,7 %, trans 1,9 %.

### Beispiel 5

In diesem Beispiel wird die Verwendung eines vorgebildeten Katalysators beschrieben. Zu 1 100 ml trockenem Benzol werden in der angegebenen Reihenfolge die Katalysatorkomponenten gegeben :

1. $AlEt_2Cl$ (4,04 mMol/100 g Monomer, 30,3 ml 0,24 m Lösung),
2. Wasser ($H_2O$ : Al = 0,27 ; 1,09 mMol/100 g Monomer),
3. Kobaltoktoat (0,058 mMol/100 g Monomer, 10,4 ml 0,01 m Co-Lösung),
4. Trisnonylphenylphosphit (Co : P = 1,0 ; 10,4 ml 0,01 m Lösung).

Daran anschließend fügt man 180 g Butadien welches 800 ppm 1,2-Butadien enthielt zu. Die Reaktion setzt nach wenigen Minuten ein. Der Umsatz nach 1 Stunde bei 30 °C beträgt 66 %. Man läßt die Temperatur auf 50° ansteigen und stoppt nach 4 Stunden Reaktionszeit ab. Ausbeute 81 %.

Mooneywert ML 4' (100°) 31. Vinylgehalt 5,9 %.

### Beispiel 6

A Analog Beispiel 5 jedoch mit nachstehenden Änderungen : 400 ppm 1,2-Butadien im Monomer.

B Analog Beispiel 5 mit folgenden Änderungen : Molverhältnis $H_2O$ : Al = 0,315, $AlEt_2Cl$ (3,48 mMol/100 g Monomer).

Ergebnisse

| | Umsatz [%] 1 | 2 | 4 Stdn. | ML 4'(100°) | 1,2 | cis-1,4 | trans-1,4 |
|---|---|---|---|---|---|---|---|
| A | 74.0 | 79.5 | 83.0 | 55 | 5,8 | 92,1 | 2,1 |
| B | 73.0 | 80,0 | 83.5 | 62 | 6,6 | 91,7 | 1,7 |

### Beispiel 7

Die Eignung der Verwendbarkeit von cycloaliphatischen Lösungsmitteln zeigt dieses Beispiel. Zu 1 280 ml trockenem Cyclohexan werden 180 g Butadien gegeben. Die Katalysatorbestandteile gibt man in der angegebenen Reihenfolge (Mengen in Klammern) zu : 1. Kobaltoktoat (14,4 ml 0,01 m Lösung in Cyclohexan) ; 2. Wasser ($H_2O$ : Al = 0,74 Molverhältnis) ; 3. Trisnonylphenylphosphit (7,2 ml 0,01 m Lösung ; Co : P = 0,5) ; 4. $AlEt_2Cl$ (45 ml 0,24 m ; Losung in Cyclohexan).

Starttemperatur : 20°. Man steigert die Temperatur im Verlauf von 1,5 Stunden auf 50° und läßt insgesamt 4 Stunden reagieren. Der Endumsatz beträgt 77 %. ML 4' (100) = 76 ; 1,2-Gehalt 13,1 %.

**Ansprüche**

1. Katalysator, bestehend aus a) einer Kobaltverbindung, b) einer aluminiumorganischen Verbindung, c) Wasser und d) einem Phosphit, dadurch gekennzeichnet, daß das Phosphit eine Verbindung der Formel (I)

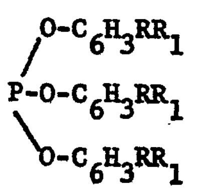

(I)

darstellt, in der

R einen $C_3$-$C_{20}$ Alkylrest und

$R_1$ Wasserstoff oder einen $C_1$-$C_6$ Alkylrest

bedeuten.

2. Katalysator gemäß Anspruch 1, dadurch gekennzeichnet, daß das molare Verhältnis von a) zu b) zwischen 1 : 5 bis 1 : 1 000, das molare Verhältnis von a) zu c) zwischen 1 : 0,5 bis 1 : 1 000 und das molare Verhältnis von a) zu d) zwischen 1 : 0,01 bis 1 : 10 liegt.

3. Katalysator gemäß Anspruch 1, dadurch gekennzeichnet, daß das molare Verhältnis von a) zu b)

zwischen 1 : 20 bis 1 : 100, das molare Verhältnis von a) zu c) zwischen 1 : 1 bis 1 : 500 und das molare Verhältnis von a) zu d) zwischen 1 : 0,2 bis 1 : 2,0 liegt.

4. Verfahren zur Herstellung des Katalysators gemäß Ansprüche 1-3, dadurch gekennzeichnet, daß man die Katalysatorkomponenten a)-d) in beliebiger Reihenfolge bei Temperaturen zwischen − 70 und + 80 °C miteinander vermischt.

5. Verfahren gemäß Anspruch 4, dadurch gekennzeichnet, daß man die Katalysatorkomponenten in der Reihenfolge b), c), a), d) miteinander umsetzt.

6. Verfahren zur Polymerisation von Butadien in Lösung in Gegenwart eines Kobaltverbindungen enthaltenden Katalysators, dadurch gekennzeichnet, daß als Katalysator eine Mischung gemäß Ansprüchen 1-3 in katalytisch wirksamen Mengen eingesetzt und in üblicher Weise polymerisiert wird.

7. Verfahren gemäß Anspruch 6, dadurch gekennzeichnet, daß der Katalysator in solchen Mengen zugegeben wird, daß pro 100 g Butadien 0,01 bis 0,5 mMol der Kobaltverbindung a) eingesetzt werden.

## Claims

1. A catalyst consisting of a) a cobalt compound, b) an aluminium organic compound, c) water and d) a phosphite, characterised in that the phosphite is a compound corresponding to the formula (I):

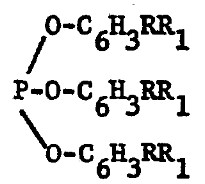

(I)

in which

R represents a $C_3$-$C_{20}$ alkyl radical, and

$R_1$ represents hydrogen or a $C_1$-$C_6$ alkyl radical.

2. A catalyst according to claim 1, characterised in that the molar ratio of a) to b) is from 1 : 5 to 1 : 1 000, the molar ratio of a) to c) is from 1 : 0.5 to 1 : 1 000 and the molar ratio of a) to d) is from 1 : 0.01 to 1 : 10.

3. A catalyst according to claim 1, characterised in that the molar ratio of a) to b) is from 1 : 20 to 1 : 100, the molar ratio of a) to c) is from 1 : 1 to 1 : 500 and the molar ratio of a) to d) is from 1 : 0.2 to 1 : 2.0.

4. A process for the production of the catalyst according to claims 1 to 3, characterised in that the catalyst components a) to d) are mixed together in any sequence at temperatures of between − 70 and + 80 °C.

5. A process according to claim 4, characterised in that the catalyst components are reacted with each other in the sequence b), c), a), d).

6. A process for the polymerisation of butadiene in solution in the presence of a catalyst containing cobalt compounds, characterised in that a mixture according to claims 1 to 3 is used in catalytically effective quantities as the catalyst and polymerisation is carried out in a conventional manner.

7. A process according to claim 6, characterised in that the catalyst is added in sufficient quantities for from 0.01 to 0.5 mmol of the cobalt compound a) to be used per 100 g of butadiene.

## Revendications

1. Catalyseur consistant en a) un composé du cobalt, b) un composé organique de l'aluminium, c) de l'eau et d) un phosphite, caractérisé en ce que le phosphite est un composé de formule (I)

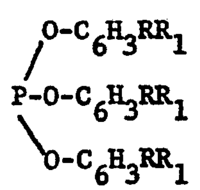

(I)

dans laquelle

R représente un groupe alkyle en $C_3$-$C_{20}$ et

$R_1$ représente l'hydrogène ou un groupe alkyle en $C_1$-$C_6$.

2. Catalyseur selon la revendication 1, caractérisé en ce que le rapport molaire entre a) et b) se situe entre 1 : 5 et 1 : 1 000, le rapport molaire entre a) et c) entre 1 : 0,5 et 1 : 1 000 et le rapport molaire entre a) et d) entre 1 : 0,01 et 1 : 10.

3. Catalyseur selon la revendication 1, caractérisé en ce que le rapport molaire entre a) et b) se situe entre 1 : 20 et 1 : 100, le rapport molaire entre a) et c) se situe entre 1 : 1 et 1 : 500 et le rapport molaire entre a) et d) entre 1 : 0,2 et 1 : 2,0.

4. Procédé de préparation du catalyseur selon l'une des revendications 1 à 3, caractérisé en ce que l'on mélange entre eux les composants du catalyseur a) à d) dans un ordre quelconque à des températures de − 70 à + 80 °C.

5. Procédé selon la revendication 4, caractérisé en ce que l'on fait réagir entre eux les composants du catalyseur dans l'ordre b), c), a), d).

6. Procédé pour polymériser le butadiène en solution en présence d'un catalyseur contenant des composés du cobalt, caractérisé en ce que l'on utilise en tant que catalyseur un mélange selon les revendications 1 à 3 en quantités catalytiques actives et on polymérise de la manière habituelle.

7. Procédé selon la revendication 6, caractérisé en ce que l'on ajoute le catalyseur en quantité telle que l'on dispose de 0,01 à 0,5 mmole du composé du cobalt a) pour 100 g de butadiène.